(19) Europäisches Patentamt
European Patent Office
Office européen des brevets

(11) Veröffentlichungsnummer: **0 026 916**
**B1**

(12) # EUROPÄISCHE PATENTSCHRIFT

(45) Veröffentlichungstag der Patentschrift: **19.01.83**

(51) Int. Cl.³: **C 08 F 297/04**

(21) Anmeldenummer: **80105936.1**

(22) Anmeldetag: **01.10.80**

(54) **Verfahren zur Herstellung von Mischungen linearer Dreiblockcopolymerisate sowie Formteile aus diesen.**

(30) Priorität: **09.10.79 DE 2940861**

(43) Veröffentlichungstag der Anmeldung: **15.04.81 Patentblatt 81/15**

(45) Bekanntmachung des Hinweises auf die Patenterteilung: **19.01.83 Patentblatt 83/3**

(84) Benannte Vertragsstaaten: **BE DE FR GB IT NL**

(56) Entgegenhaltungen:
**US-A-3 507 934**
**US-A-4 080 407**

(73) Patentinhaber: **BASF Aktiengesellschaft, Carl-Bosch-Strasse 38, D-6700 Ludwigshafen (DE)**

(72) Erfinder: **Gerberding, Karl, Dr., Inn der Dreispitz 9, D-6706 Wachenheim (DE)**

**EP 0 026 916 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von Mischungen linearer Dreiblockcopolymerisate sowie Formteile aus diesen

Die Erfindung betrifft ein Verfahren zur Herstellung von Mischungen linearer Dreiblockcopolymerisate die aus einem überwiegenden Anteil einer monovinylaromatischen Verbindung und einem geringeren Anteil eines konjugierten Diens aufgebaut sind und die hohe Transparenz und Klarheit sowie gute mechanische Eigenschaften, insbesondere hohe Schlagzähigkeit, aufweisen und gut verarbeitbar sind.

Zum Stand der Technik nennen wir:

(1) GB-PS 884 974
(2) DE-OS 1 645 406 (US-PS 3 507 934)
(3) DE-OS 1 959 922 (US-PS 3 659 517)
(4) DE-OS 2 550 227
(5) DE-OS 2 541 511
(6) DE-OS 2 529 065.

Die Herstellung von linearen Zwei- und Multiblockcopolymerisaten, die aus Styrol und Butadien als Dienkomponente aufgebaut sind, ist ganz allgemein aus (1) bekannt. In der Folge wurden elastomere Formmassen (vgl. 2) vorgeschlagen, die auf linearen Dreiblockcopolymerisaten A – B – A basieren, und die durch abwechselnde Zugabe der Monomerensorte A (Styrol) und mehrfacher Initiatorzugabe hergestellt werden können. Bei dem bekannten Verfahren wird eine polymodale Verteilung der A-Blöcke erzielt. Die Herstellung des linearen Dreiblockcopolymerisates erfolgt beim bekannten Verfahren durch Kupplung z. B. von $A-B_{1/2}-Li$ mittels Dichloräthan zu Gemischen aus linearen Dreiblockcopolymerisaten.

Für thermoplastische Formmassen wird in (3) vorgeschlagen, von einem linearen, lebenden Zweiblockcopolymerisat $A-B-Li$ als Basis auszugehen und aus diesem mit Hilfe einer Kupplungsreaktion sternförmig verzweigte Blockcopolymerisate herzustellen. Bei der Herstellung der linearen Ausgangsprodukte wird das monovinylaromatische Monomere (Styrol) in mehreren Anteilen zugegeben; auch der Initiator wird portionsweise zugegeben, so daß die erhaltenen sternförmig verzweigten Endprodukte eine polymodale Verteilung aufweisen.

Aus (4) schließlich ist es bekannt, sternförmig verzweigte, eine polymodale Verteilung aufweisende Blockmischpolymerisate herzustellen, bei denen die einzelnen Sterne aus linearen Dreiblockcopolymerisaten aufgebaut sind. Diese sternförmig verzweigten Blockmischpolymerisate weisen ebenso wie die aus (3) bekannten Produkte eine gute Transparenz und eine leichte Verarbeitbarkeit auf, zeigen jedoch gegenüber den aus (3) bekannten Produkten verbesserte mechanische Eigenschaften.

In (5) ist ein Verfahren zur Herstellung eines nicht-verzweigten Blockcopolymerengemisches beschrieben, das einen Anteil einer vinylaromatischen Verbindung im Bereich von 60 bis 95 Gew.-% enthält. Es handelt sich bei dem bekannten Verfahren um ein Mehrstufenverfahren, bei dem einer ersten Verfahrensstufe ein Polymeres bzw. Copolymeres, insbesondere ein Blockcopolymeres hergestellt wird, an dessen lebendes Ende in einer weiteren Stufe nach erneuter Zugabe von Initiator weitere Monomere oder Gemische von Monomeren anpolymerisiert werden können. Aus der Aufgabenstellung (vgl. Beschreibung) geht hervor, daß das Ziel des Anmelders darin bestand, stabile Dispersionen in Form von Blockcopolymerisatmischungen in aliphatischen Kohlenwasserstoffen herzustellen. Dieses Ziel kann (vgl. die Ausführungen auf Seite 14, Absatz 2) nur erreicht werden, wenn das Verhältnis des Gehalts an monovinylaromatischer Verbindungen in der ersten und zweiten Verfahrensstufe mindestens 1 : 1,8 beträgt. In den Vergleichsversuchen wird gezeigt, daß, wenn diese Bedingung nicht erfüllt ist, entweder keine stabile Dispersion erhalten wird oder Polymerisatgemische anfallen, die trübe sind, schlechte Durchsichtigkeit aufweisen und bei denen außerdem die Zugfestigkeit nicht hinreichend ist sowie die Schlagfestigkeit sehr zu wünschen übrig läßt.

Aus den unter (3) und (4) angeführten Schriften mußte der Fachmann die Lehre entnehmen, daß zur Herstellung hochstyrolhaltige Blockcopolymerisate enthaltender Formmassen, die gute mechanische Eigenschaften, hohe Transparenz und gleichzeitig gute Verarbeitbarkeit aufweisen die Kupplung linearer Blockcopolymerisate erforderlich ist. Diese Kupplungsreaktion stellt einen selbständigen Verfahrensschritt dar, der oft nur unter unvollständigem Umsatz verläuft; ferner führt diese Kupplungsreaktion in der Regel [vgl. (6)] nicht zu einheitlichen Produkten. Außerdem wird in vielen Fällen durch das verwendete Kopplungsmittel ein Zentralatom eingeführt, dessen Anwesenheit sich schädlich auf das Verhalten des Endproduktes auswirkt. In manchen Fällen ist es auch so, daß bei dem Verfahren zur Herstellung des gekuppelten Produkts toxisch wirkende Substanzen, wie epoxidiertes Sojabohnenöl oder Dichloräthan [vgl. (2)] verwendet werden müssen.

Andererseits ist aus (5) bekannt, daß nur in besonders gelagerten Fällen stabile Mischungen von linearen, hochstyrolhaltigen Blockcopolymerisaten in Hexan erhalten werden kö[illegible]n

Es bestand daher die Aufgabe, ein einfaches und universell anwendbares Ve[illegible] zur Herstellung von transparenten, hochschlagzähen und leicht verarbeitbaren Mischungen vo[illegible]ckcopolymerisa- in Lösung in Gegenwart eines Monolithium-Kohlenwasserstoffs als Initiator [illegible]nter stufenweiser

ten vorzuschlagen, das die vorstehend beschriebenen Nachteile nicht aufweist und das es außerdem gestattet, den Initiatorgehalt im Endprodukt auf niedrigere Werte einzustellen, als sie vom Stand der Technik her bekannt sind. Überraschenderweise liefert ein Gemisch von Blockcopolymerisaten, das nach dem erfindungsgemäßen Verfahren hergestellt wird, Produkte, die eine Schlagzähigkeit, Transparenz und Verarbeitbarkeit aufweisen, wie sie bislang nur von den sternförmig verzweigten Blockcopolymerisaten bekannt war. Nach dem erfindungsgemäßen Verfahren können bei niedrigerem Butadiengehalt Produkte mit einer Schlagzähigkeit hergestellt werden, die in der Regel nur von den sternförmig verzweigten Blockcopolymerisaten her erreicht werden. Dies konnte vom Fachmann nicht erwartet werden.

Die vorliegende Erfindung betrifft demgemäß ein Verfahren zur Herstellung einer Mischung von Blockcopolymerisaten, enthaltend 70 bis 80 Gew.-% eines monovinylaromatischen Monomeren und 20 bis 30 Gew.-% eines konjugierten Diens, die im wesentlichen die beiden folgenden linearen Dreiblockcopolymerisate

$$A^1 - A^2 - B \rightarrow A^3$$
$$A^2 - B \rightarrow A^3$$

enthält, worin $A^1$, $A^2$ und $A^3$ nicht-elastomere Polymersegmente unterschiedlichen Aufbaues und unterschiedlicher Molekulargewichtsbereiche auf Basis einer monovinylaromatischen Verbindung und B elastomere Polymersegmente auf Basis eines konjugierten Diens mit 4 bis 8 C-Atomen bedeuten und wobei die Übergänge zwischen den Polymersegmenten B und $A^3$ allmählich erfolgen und die übrigen Übergänge alle scharf sind, wobei in einem inerten Lösungsmittel in einer

a) ersten Verfahrensstufe ein relativ großer Anteil des monovinylaromatischen Monomeren in Gegenwart von höchstens der Hälfte, bezogen auf die anzuwendende Gesamtmenge eines Monolithiumkohlenwasserstoffes als Initiator (Ia) bis zur praktisch vollständigen Umsetzung des Monomeren polymerisiert wird, sodann
b) in einer zweiten Verfahrensstufe nach Zugabe der restlichen Initiatormenge (Ib), die wenigstens gleich der in Verfahrensstufe a) angewendeten Menge ist, und Zugabe eines weiteren Teils des monovinylaromatischen Monomeren zu der Lösung die Polymerisation bis zur vollständigen Umsetzung der (des) Monomeren weitergeführt und schließlich
c) in einer dritten Verfahrensstufe der Reaktionslösung eine Mischung aus der restlichen Menge des monovinylaromatischen Monomeren und der Gesamtmenge der Monomeren des konjugierten Diens zugegeben wird und bis zur praktisch vollständigen Umsetzung der Monomeren polymerisiert wird,

dadurch gekennzeichnet, daß die Summe der in der ersten a) und zweiten Verfahrensstufe b) eingesetzten Menge an monovinylaromatischen Monomeren mehr als 70 Gew.-% höchstens jedoch 90 Gew.-%, bezogen auf die Gesamtmenge an vinylaromatischen Monomeren, beträgt und wobei man in der ersten Verfahrensstufe a) 40 bis 80 Gew.-% der insgesamt anzuwendenden monovinylaromatischen Monomeren und eine solche Menge Initiator verwendet, daß das Molverhältnis der in der ersten und der zweiten Verfahrensstufe angewendeten Initiatormengen Ia/Ib im Bereich von 1 : 2 bis 1 : 8 liegt, und daß man in der zweiten Verfahrensstufe b) 15 bis 30 Gew.-% der insgesamt anzuwendenden monovinylaromatischen Monomeren zugibt, und in der Verfahrensstufe c) eine Mischung aus 10 bis 30 Gew.-% an vinylaromatischen Monomeren, bezogen auf die insgesamt anzuwendende Menge des monovinylaromatischen Monomeren und 15 bis 35 Gew.-% an Monomeren des konjugierten Diens, bezogen auf die Gesamtmenge der anzuwendenden Monomeren, zugibt und nach vollständiger Umsetzung der Monomeren die Mischung der lebenden Polymerisate mit protonenaktiven Verbindungen behandelt und das Gemisch der Blockcopolymerisate durch Entfernung des Lösungsmittels gewinnt.

Monovinylaromatische Monomere, die für den Aufbau der erfindungsgemäßen nicht-verzweigten, linearen Blockcopolymerisate in Betracht kommen, sind beispielsweise Styrol, die seitenkettenalkylierten Styrole, wie $\alpha$-Methylstyrol und die kernsubstituierten Styrole, wie Vinyltoluol oder Äthylvinylbenzol. Die monovinylaromatischen Monomeren können dabei alleine oder in Mischungen miteinander eingesetzt werden. Vorzugsweise wird jedoch Styrol allein verwendet. Beispiele für konjugierte Diene mit 4 bis 8 C-Atomen, die allein oder in Mischungen untereinander für die Herstellung der verzweigten Blockcopolymerisate verwendet werden können, sind Butadien, Isopren sowie 2,3-Dimethylbutadien. Besonders günstig sind dabei Butadien und Isopren, wobei wiederum Butadien bevorzugt wird.

Die nach dem erfindungsgemäßen Verfahren erhaltene Mischung von linearen Blockcopolymerisaten soll insgesamt 70 bis 80 Gew.-%, insbesondere 72 bis 78 Gew.-%, des monovinyl-aromatischen Monomeren und 30 bis 20 Gew.-%, vorzugsweise 28 bis 22 Gew.-%, des konjugierten Diens, jeweils bezogen auf die Summe der insgesamt eingesetzten Monomeren, einpolymerisiert enthalten.

Das erfindungsgemäße Verfahren wird durch aufeinanderfolgende Polymerisation der Monomeren Monomer- und Initiatorzugabe und anschließender Behandlung der erhaltenen, lebenden linearen

Blockcopolymerisate mit einer protonenaktiven Verbindung im einzelnen wie folgt hergestellt:

In einer ersten Verfahrensstufe a) wird zunächst durch anionische Polymerisation das nicht-elastomere Polymersegment $A^1$ hergestellt, indem man einen wesentlichen Teil der Gesamtmenge des monovinylaromatischen Monomeren mittels einer relativ kleinen Menge des Monolithium-Kohlenwasserstoffinitiators in einem inerten Lösungsmittel unter üblichen Bedingungen polymerisiert. Hierbei sollen 40 bis 80 Gew.-%, vorzugsweise 45 bis 70 Gew.-%, der Gesamtmenge des monovinylaromatischen Monomeren, die insgesamt für die Herstellung der Mischung der Blockcopolymerisate verwendet wird, eingesetzt werden.

Die Menge an eingesetztem Initiator Ia, in der ersten Verfahrensstufe richtet sich vor allem nach dem gewünschten Molekulargewicht des Mischpolymerisats und liegt im allgemeinen im Bereich von 0,5 bis 1,1 mMol pro Mol des in dieser ersten Verfahrensstufe eingesetzten monovinylaromatischen Monomeren. Vorzugsweise werden für die Polymerisation in der ersten Verfahrensstufe 0,62 bis 1,0 mMol pro Mol des monovinylaromatischen Monomeren verwendet.

Als Initiator dienen die bekannten Monolithium-Kohlenwasserstoffe der allgemeinen Formel RLi, worin R einen aliphatischen, cycloaliphatischen, aromatischen oder gemischt aliphatisch-aromatischen Kohlenwasserstoffrest darstellt. Der Kohlenwasserstoffrest kann 1 bis etwa 12 Kohlenstoffatome besitzen. Als Beispiele für die erfindungsgemäß einzusetzenden Lithiumkohlenwasserstoff-Initiatoren seien genannt: Methyllithium, Äthyllithium, (n-, sec.-, tert.-)Butyllithium, Isopropyllithium, Cyclohexyllithium; Phenyllithium oder p-Tolyllithium. Vorzugsweise werden die Monolithiumalkylverbindungen mit 2 bis 6 Kohlenstoffatomen in der Alkylgruppe eingesetzt, wobei n-Butyllithium und sec.-Butyllithium besonders bevorzugt sind.

Die Polymerisation der monovinylaromatischen Verbindungen wird dabei in Lösung in einem üblichen inerten organischen Kohlenwasserstofflösungsmittel durchgeführt. Geeignete Kohlenwasserstoff-Lösungsmittel sind aliphatische, cycloaliphatische oder aromatische Kohlenwasserstoffe, die unter Reaktionsbedingungen flüssig sind und vorzugsweise 4 bis 12 Kohlenstoffatome enthalten. Als Lösungsmittel kommen beispielsweise in Betracht: Cyclohexan, Isobutan, n-Pentan, Isooctan; Cyclopentan, Cycloheptan; Benzol, Toluol, die Xylole und andere. Ebenso können Gemische dieser Lösungsmittel eingesetzt werden.

Ferner ist es möglich, die Polymerisation in Gegenwart geringer Mengen, im allgemeinen $10^{-3}$ bis 5 Gew.-%, bezogen auf das Gesamtlösungsmittel, an Äthern, wie Tetrahydrofuran, Dimethoxyäthan, Phenylmethyläther und anderen, durchzuführen, wodurch in bekannter Weise die Polymerisationsgeschwindigkeit, die Konfiguration der Butadienpolymerisat-Segmente B sowie auch der statistische Übergang zwischen den Segmenten B und $A^3$ beeinflußt werden kann. Vorzugsweise wird jedoch ohne Ätherzusatz gearbeitet.

Die Konzentration der Monomeren in der Reaktionslösung ist nicht kritisch und kann so eingestellt werden, daß jede gewünschte Vorrichtung für die Polymerisation verwendet werden kann. Üblicherweise wird in 10- bis 30%igen Lösungen der inerten Lösungsmittel polymerisiert.

Die Polymerisation erfolgt unter den für die anionische Polymerisation mit lithiumorganischen Verbindungen üblichen Bedingungen, wie z. B. in Inertgas-Atmosphäre unter Luft- und Feuchtigkeitsausschluß. Die Polymerisationstemperatur kann zwischen 10 und 180° C liegen und wird vorzugsweise zwischen 50 und 120° C gehalten.

Die Polymerisation in der ersten Verfahrensstufe wird bis zur praktisch vollständigen Umsetzung der eingesetzten monovinylaromatischen Verbindungen geführt. Man erhält so eine Lösung von nicht-elastomeren, lebenden Polymeren aus den monovinylaromatischen Verbindungen (Polymersegment $A^1$) mit aktiven, endständigen Lithium-Kohlenstoff-Bindungen, welche zur weiteren Anlagerung von Monomeren fähig sind.

In der zweiten Verfahrensstufe (b) werden zu dieser Lösung der nicht-elastomeren lebenden Polymeren eine weitere Initiatormenge, Ib, und weitere 10 bis 30 Gew.-%, vorzugsweise 15 bis 25 Gew.-%, der Gesamtmenge der für die Herstellung der verzweigten Blockcopolymerisate insgesamt verwendeten monovinylaromatischen Monomeren zugesetzt. Das Verhältnis der in der ersten und zweiten Verfahrensstufe verwendeten Mengen an vinylaromatischen Verbindungen soll im Bereich von 8 : 1 bis 2 : 1, insbesondere in einem Bereich von 6 : 1 bis 3 : 1 liegen. Die Summe der in der ersten und zweiten Verfahrensstufe eingesetzten Menge an monovinylaromatischen Monomeren soll dabei jedoch höchstens 90 Gew.-%, und mehr als 70 Gew.-%, der Gesamtmenge der monovinylaromatischen Verbindung, die insgesamt für die Herstellung des Gemisches der Blockcopolymerisate verwendet wird, betragen.

Die Menge an Initiator Ib, die der Reaktionslösung in der zweiten Verfahrensstufe zusätzlich zugegeben wird, soll größer sein als die Initiatormenge Ia, die in der ersten Verfahrensstufe der Polymerisation eingesetzt worden ist. Das Molverhältnis beträgt, bezogen auf die Verfahrensstufen a) und b), Ia/Ib das 1 : 2 bis 1 : 8 insbesondere 1 : 3 bis 1 : 6.

Als Initiator kommen dabei die Monolithiumkohlenwasserstoffe in Betracht, die auch in der ersten Verfahrensstufe verwendet werden, vorzugsweise wird der gleiche Initiator wie in der ersten Verfahrensstufe benutzt. Es ist dabei günstig, wenn der zusätzliche Initiator Ib der Reaktionslösung zugegeben wird, bevor man den weiteren Anteil des monovinylaromatischen Monomeren zusetzt.

In der zweiten Verfahrensstufe b) werden in der Regel die gleichen Polymerisationsbedingungen

aufrecht erhalten wie in der ersten Verfahrensstufe; auch in der Stufe b) wird bis zum praktisch vollständigen Umsatz der zugegebenen monovinylaromatischen Monomeren polymerisiert. Dabei werden die in der zweiten Verfahrensstufe zugegebenen Monomeren sowohl an die aktiven, lithiumterminierten Kettenenden der zuvor in der ersten Verfahrensstufe gebildeten Polymersegmente $A^1-Li$ unter Bildung von $A^1-A^2-Li$ angelagert als auch werden durch den zusätzlichen frischen Initiator neue Ketten von lebenden Polymeren $A^2-Li$ gebildet.

Das Verhältnis, in dem diese zwei Typen von nicht-elastomeren Polymersegmenten auf der Basis der monovinylaromatischen Verbindungen nach vollständiger Polymerisation der monovinylaromatischen Verbindung in der Reaktionslösung am Ende der zweiten Verfahrensstufe b) vorliegen, entspricht demzufolge dem Initiator-Verhältnis der ersten und zweiten Verfahrensstufe. Beide Typen der Polymersegmente $(A^1-A^2)$ und $A^2$ haben an ihrem einen Kettenende aktive, reaktionsfähige Lithium-Kohlenstoff-Bindungen, die zur weiteren Anlagerung von Monomeren fähig sind.

In einer dritten Verfahrensstufe c) schließlich werden an die aktiven Kettenenden der nicht-elastomeren Polymersegmente $(A^1-A^2)-Li$ und $A^2-Li$ die Polymersegmente B und hieran anschließend die Polymersegmente $A^3$ unter Bildung der Polymerblöcke $(A^1-A^2-B\rightarrow A^3)$ und $(A^2-B\rightarrow A^3)$, anpolymerisiert. Hierzu wird zu der auspolymerisierten Reaktionslösung der zweiten Verfahrensstufe b) eine Monomer-Mischung aus dem restlichen monovinylaromatischen Monomeren, dies entspricht 10 bis 30 Gew.-% und insbesondere 15 bis 25 Gew.-% des insgesamt anzuwendenden monovinylaromatischen Monomeren, und die Gesamtmenge des konjugierten Diens zugesetzt. Die Menge an konjugiertem Dien beträgt dabei 15 bis 35 Gew.-%, vorzugsweise 10 bis 30 Gew.-%, der zur Herstellung der erfindungsgemäßen verzweigten Blockcopolymerisate insgesamt eingesetzten beiden Monomerentypen. Die Monomer-Mischung wird unter den gleichen Polymerisationsbedingungen, wie sie für die beiden ersten Verfahrensstufen a) und b) gelten, wiederum bis zum praktisch vollständigen Umsatz der Monomeren polymerisiert.

Infolge der unterschiedlichen Copolymerisationsparameter polymerisieren die konjugierten Diene dabei wesentlich rascher als die monovinylaromatischen Verbindungen, so daß nach Zugabe der Monomer-Mischung in der dritten Verfahrensstufe zunächst überwiegend die konjugierten Diene und nur vereinzelt die monovinylaromatischen Verbindungen einpolymerisiert werden. Erst gegen Ende der Dien-Polymerisation, d. h. wenn fast alle konjugierten Dienmonomeren auspolymerisiert sind, setzt die Polymerisation der monovinylaromatischen Verbindungen in merklichem Maße ein, so daß der überwiegende Anteil — in der Regel mehr als 70 und überwiegend mehr als 80 Gew.-% — der in der Verfahrensstufe c) zugegebenen Monomer-Mischung enthaltenen monovinylaromatischen Monomeren erst nach Verbrauch des konjugierten Diens polymerisiert.

In der dritten Verfahrensstufe wird also an die nicht-elastomeren Polymersegmente $(A^1-A^2)-Li$ bzw. $A^2-Li$ zunächst ein elastomeres Polymersegment B auf der Basis der konjugierten Diene anpolymerisiert, welches ein Copolymerisat aus hauptsächlich dem konjugierten Dien und geringen Mengen des monovinylaromatischen Monomeren ist, wonach anschließend ein nicht-elastomeres Polymersegment $A^3$ gebildet wird, welches nur aus den monovinylaromatischen Monomeren aufgebaut ist. Da der Anteil des monovinylaromatischen Monomeren gegen das lebende Ende des Polymersegments B immer stärker zunimmt und der Anteil des konjugierten Diens dementsprechend ständig abnimmt, ist der Übergang zwischen den so gebildeten Polymersegmenten B und $A^3$ nicht scharf, sondern er erfolgt allmählich; vielfach spricht man daher auch von einem »verschmierten« Übergang zwischen den Segmenten. Dieser Tatsache wird in der allgemeinen Formel für die Gemische der Blockcopolymerisate durch das Symbol $\rightarrow$ Rechnung getragen.

Nach Auspolymerisation der Monomeren-Mischung in der dritten Verfahrensstufe c) liegt in der Reaktionslösung ein Gemisch aus lebenden, linearen Blockcopolymerisaten des Typs $(A^1-A^2-B\rightarrow A^3)-Li$ und $(A^2-B\rightarrow A^3)-Li$ mit aktiven reaktionsfähigen Lithium-Kohlenstoff-Bindungen jeweils am freien Ende der Polymersegmente $A^3$ vor. Die Inaktivierung des Gemisches der lebenden Blockcopolymeren erfolgt durch eine Behandlung mit protonenaktiven Stoffen unter den Bedingungen, unter denen die Polymerisation durchgeführt wird. Die protonenaktiven Stoffe werden zu der Lösung von Verfahrensstufe c) unter Rühren in solchen Mengen zugegeben, bis die für die Styrol-Lithium-Bindung typische Rot-Färbung der Lösung verschwindet.

Als protonenaktive Substanzen im Sinne der vorliegenden Erfindung sind alle Verbindungen geeignet, die die lebenden Polymeren z. B. durch Abgabe von $H^+$ oder anderer Gruppierungen inaktivieren können. Beispielsweise seien genannt: Wasser, Alkohole, wie $CH_3OH$, $C_2H_5OH$ oder, falls reaktionsfähige Gruppen an das Ende der Polymerkette eingeführt werden sollen, was nicht bevorzugt wird, können auch $CO_2$, Isocyanate Amine und dergleichen Verwendung finden. Von den vorstehend genannten Substanzen werden insbesondere Wasser und Alkohole in ausreichenden (berechenbaren) Mengen angewendet.

Die Isolierung des nach der Behandlung mit protonenaktiven Substanzen erhaltenen Gemisches linearer Blockcopolymerisate aus der Reaktionslösung erfolgt in üblicher Weise, beispielsweise durch Ausfällen mit Methanol, durch Abziehen des Lösungsmittels in einer Entspannungsvorrichtung und Extrusion des Wertproduktes, durch Versprühen der Lösung zusammen mit Wasserdampf oder beispielsweise durch Entfernung des Lösungsmittels mit überhitztem Wasserdampf (Abstreifen). Es können auch Kombinationen der vorstehend erwähnten Aufarbeitungsverfahren angewendet werden.

Anschließend an das Behandeln mit protonenaktiven Substanzen und zweckmäßigerweise vor der Isolierung des Produktes aus der Reaktionslösung kann die Mischung der Blockcopolymerisate ggf. noch hydriert werden. Die Hydrierung kann dabei selektiv oder nicht selektiv erfolgen und wird normalerweise mit Hilfe von molekularem Wasserstoff und Katalysatoren auf Basis von Metallen oder Metallsalzen der 8. Gruppe des Periodensystems durchgeführt. Dies kann entweder in homogener Phase mit Katalysatoren auf Basis von Salzen, insbesondere den Carboxylaten, Alkoxiden oder Enolaten des Cobalts, Nickels oder Eisens, die mit Metallalkylen, insbesondere Aluminiumalkylen, reduziert sind, geschehen, wie es z. B. in der US-PS 3 113 986, der DE-AS 1 222 260 oder der DE-OS 2 013 263 beschrieben ist. Dabei werden unter milden Bedingungen bei Wasserstoffdrücken zwischen 1 und 100 bar und Temperaturen zwischen 25 und 150°C die olefinischen Doppelbindungen selektiv hydriert. Die Hydrierung kann auch in heterogener Phase mit Nickel- oder Platinmetallen als Katalysatoren bei Wasserstoffdrücken von 20 bis 300 bar und Temperaturen zwischen 40 und 300°C durchgeführt werden (z. B. nach der DE-AS 1 106 961 oder der DE-OS 1 595 345).

Bei diesem Verfahren werden in der Regel neben den olefinischen Doppelbindungen auch die aromatischen Doppelbindungen hydriert. Wenn die Hydrierung in Lösung erfolgt, wird sie vorzugsweise in demselben Lösungsmittel durchgeführt wie die vorangegangene Polymerisation. Das Blockcopolymerisat-Gemisch kann selektiv, partiell oder vollständig hydriert werden. Vorzugsweise werden, falls hydriert wird, selektiv die olefinischen Doppelbindungen des Polymerisates hydriert, wobei das hydrierte Blockcopolymerisatgemisch vorzugsweise dann nur noch weniger als 10% und insbesondere weniger als 3% olefinische Doppelbindungen enthalten soll.

Das nicht-elastomere Polymersegment $A^1$, welches 40 bis 80 Gew.-%, vorzugsweise 45 bis 70 Gew.-%, der insgesamt zur Herstellung des Blockcopolymerisatgemisches eingesetzten monovinylaromatischen Monomeren einpolymerisiert enthält, besteht vorzugsweise nur aus dem monovinylaromatischen Monomeren und stellt insbesondere ein Homopolystyrol-Segment dar. Sein Molekulargewicht richtet sich vornehmlich nach dem für das Endprodukt vorgesehenen Verwendungszweck und liegt vorzugsweise im Bereich von 90 000 bis 130 000. Die Polymersegmente $A^2$ entsprechen den Polymersegmenten $A^1$, nur daß sie ein geringeres Molekulargewicht, üblicherweise zwischen 5 000 und 30 000, insbesondere zwischen 8 000 und 20 000 besitzen. Sie können enthalten 10 bis 30 Gew.-% und enthalten vorzugsweise 15 bis 25 Gew.-% des gesamten monovinylaromatischen Monomeren einpolymerisiert. Das elastomere Polymersegment B ist, wie erwähnt, ein Copolymerisatblock aus im wesentlichen dem konjugierten Dien sowie einem geringen Anteil an monovinylaromatischen Monomeren, wobei ggf. insbesondere die olefinischen Doppelbindungen selektiv hydriert sein können. Der Anteil des monovinylaromatischen Monomeren im Polymersegment B liegt im allgemeinen etwa unter 30 Gew.-% und insbesondere etwa unter 15 Gew.-%, bezogen auf die Rest-Menge an monovinylaromatischen Monomeren, das nicht in den Polymersegmenten $A^1$ und $A^2$ eingebaut ist. Die nicht-elastomeren Polymersegmente $A^3$ sind, wie die Polymersegmente $A^1$ und $A^2$, vorzugsweise nur aus der monovinylaromatischen Verbindung aufgebaut und sind insbesondere Homo-Polystyrol. Das Molekulargewicht der Polymerblöcke ($A^1-A^2-B \rightarrow A^3$) liegt im allgemeinen im Bereich von 120 000 bis 300 000, vorzugsweise im Bereich von 140 000 bis 240 000, das der Polymerblöcke ($A^2-B \rightarrow A^3$) im Bereich von 20 000 bis 100 000, insbesondere im Bereich von 30 000 bis 80 000. Bei diesen Angaben handelt es sich um das Gew.-Mittel des Molekulargewichts, bestimmt durch Viskositätsmessungen in Toluol bei 25°C.

Die Mischung enthält im wesentlichen die beiden folgenden linearen Dreiblockcopolymerisate

$$A^1-A^2-B \rightarrow A^3$$
$$A^2-B \rightarrow A^3$$

worin $A^1$, $A^2$ und $A^3$ nicht-elastomere Polymersegmente unterschiedlichen Aufbaus und unterschiedlicher Molekulargewichtsbereiche auf Basis einer monovinylaromatischen Verbindung und B elastomere Polymersegmente auf Basis eines konjugierten Diens mit 4 bis 8 C-Atomen bedeutet und wobei die Übergänge zwischen den Polymersegmenten B und $A^3$ allmählich erfolgen und die übrigen Übergänge alle scharf sind.

Die nach dem erfindungsgemäßen Verfahren hergestellten Gemische aus linearen Blockcopolymerisaten besitzen neben hoher Transparenz und Klarheit gute mechanische Eigenschaften und sind insbesondere hinsichtlich ihrer Schlagzähigkeit und Streckspannung den aus (3). bekannten Produkten und den aus 4. bekannten Erzeugnissen gleichwertig. Es war nicht vorherzusehen, daß auch die Verarbeitbarkeit der Gemische linearer Blockcopolymerisate sich nicht in nennenswerter Weise nach dem aus (4) bekannten Verfahren hergestellten verzweigten Blockcopolymerisaten unterscheidet.

Die erfindungsgemäß hergestellten Gemische linearer Blockcopolymerisate lassen sich nach den üblichen Verarbeitungsverfahren für Thermoplaste, wie Extrudieren, Tiefziehen oder Spritzgießen leicht verarbeiten und eignen sich vor allem für die Herstellung von Formkörpern und Verpackungsmitteln. Durch die Hydrierung kann insbesondere die Alterungsbeständigkeit der Produkte und seiner Abmischungen verbessert werden. Die nach dem erfindungsgemäßen Verfahren erhaltenen Mischungen eignen sich insbesondere für Abmischungen mit Standardpolystyrol in den

dem Fachmann bekannten Mengen um dessen Eigenschaften zu verbessern.

Die Erfindung wird nachstehend anhand der Beispiele näher erläutert. Als Maß für das Molekulargewicht ist die Viskositätszahl, gemessen in 0,5%iger Lösung in Toluol bei 25° C, angegeben. Die Lochkerbschlagzähigkeit $A_{KL}$ und die Kerbschlagzähigkeit $A_k$ wurden nach DIN 53 453 am gespritzten Formkörper bestimmt. Die Streckspannung $\sigma_S$ und Reißdehnung $\varepsilon_R$ am gespritzten Schulterstab nach DIN 53 455 gemessen. Ferner wurde das mechanische Verhalten der Produkte bei schneller Beanspruchung gemäß DIN 53 443, Bl. 2, (Plastichontest) untersucht. Die in dem Beispiel und Vergleichsversuch genannten Teile und Prozente beziehen sich auf das Gewicht. Die Trübung wurde gemäß DIN 5036 (Stand 1966) bestimmt.

## Beispiel

584 g Styrol wurden in 4368 g Cyclohexan mit sec.-Butyl-Lithium unter Inertgas bis zur Rot-Färbung austitriert und mit 3,72 mMol ($I_a$) sec.-Butyl-Lithium als Initiator bei 60° C 45 min lang polymerisiert. Die Viskositätszahl einer entnommenen Probe betrug 68,8 cm³/g. Es wurden erneut 18,98 mMol ($I_b$) sec.-Butyl-Lithium und 219 g Styrol zugegeben und 45 min bei 60° C polymerisiert. Die Viskositätszahl an einer entnommenen Probe wurde zu 56 cm³/g bestimmt. In einer weiteren Stufe wurde eine Mischung aus 219 g Styrol und 378 g Butadien zugegeben. Es wurde 2¹/₂ Stunden bei 60° C gerührt, bis die Lösung eine deutliche Rot-Färbung aufwies; danach wurde noch 45 min nachgerührt und mit 25 g Isopropanol die Polymerisation abgebrochen. Es wurde mit 4,3 g tert.-Butylkresol stabilisiert, das Gemisch der Polymerisate gefällt und diese im Vakuum getrocknet. Die Viskositätszahl an Endprodukt wurde zu 78 cm³/g bestimmt.

## Vergleichsversuch

584 g Styrol wurden in 4368 g Cyclohexan mit sec.-Butyl-Lithium unter Inertgas ($N_2$) bis zur Rot-Färbung austitriert und mit 3,7 mMol sec.-Butyl-Lithium ($I_a$) als Initiator bei 60° C 45 min lang polymerisiert. Die Viskositätszahl wurde zu 62,5 cm³/g bestimmt. Es wurden 18,98 mMol sec.-Butyl-Lithium ($I_b$) und 219 g Styrol zugegeben und 45 min bei 60° C polymerisiert. Die Viskositätszahl einer entnommenen Probe betrug 75,2 cm³/g. In einer weiteren Verfahrensstufe wurden 378 g Butadien zugegeben und 1¹/₂ Std. lang bei 60 bis 80° C polymerisiert. Die Viskositätszahl an einer entnommenen Probe wurde zu 84,6 cm³/g bestimmt.

Abschließend wurden 219 g Styrol zugegeben und 45 min bei 60° C gerührt. Die Polymerisation wurde durch Zugabe von 35 g Isopropanol abgebrochen, das Produkt wurde mit 4,3 g tert.-Butylkresol stabilisiert, ausgefällt und im Vakuum getrocknet. Die Viskositätszahl, bestimmt am Endprodukt, betrug 89 cm³/g.

In der folgenden Tabelle sind die für die erfindungsgemäßen Mischungen und die Mischungen aus dem Vergleichsversuch, eine Reihe von Meßwerten aneinander gegenübergestellt. Aus den Versuchsergebnissen ist ersichtlich, daß die erfindungsgemäße Mischung bei vergleichbarer Steifigkeit (vgl. die Werte für die Streckspannung) und bei vergleichbarem Verhalten bei schneller Beanspruchung (Plastichontest) im Zähigkeitsverhalten, in der Dehnung und in der Transparenz (Trübung in %) den Vergleichsprodukt überlegen sind.

Der Vergleichsversuch belegt somit, daß die erfindungsgemäßen Mischungen mit einem verschmierten Übergang $B \rightarrow A^3$ sogar gegenüber Mischungen gleicher Zusammensetzung und scharfen Übergängen $B \rightarrow A^3$ überlegen sind.

Dies konnte vom Fachmann nicht erwartet werden.

| | Beispiel | Vergleichs-beispiel |
|---|---|---|
| Kerbschlagzähigkeit [kJ/m²] | 31,7 | 6,6 |
| Lochkerbschlagzähigkeit [kJ/m²] | 48,8 | 10,5 |
| Streckspannung, $\sigma_s$, [N/mm²] | 21,0 | 28,1 |
| Reißdehnung, $\varepsilon_R$, [%] | 137,2 | 24,7 |
| Schädigungsarbeit [Nm] | 20,22 | 20,99 |
| Durchstoßarbeit [Nm] | 30,75 | 31,77 |
| Schädigungskraft [N] | 2281,44 | 2336,32 |
| Schädigungsverformung [mm] | 13,74 | 13,29 |
| Trübung [%] | 6 | 10 |

**Patentansprüche**

1. Verfahren zur Herstellung einer Mischung von Blockcopolymerisaten, enthaltend 70 bis 80 Gew.-% eines monovinylaromatischen Monomeren und 20 bis 30 Gew.-% eines konjugierten Diens, die im wesentlichen die beiden folgenden linearen Dreiblockcopolymerisate

$A^1 - A^2 - B \rightarrow A^3$
$A^2 - B \rightarrow A^3$

enthält, worin $A^1$, $A^2$ und $A^3$ nicht-elastomere Polymersegmente unterschiedlichen Aufbaues und unterschiedlicher Molekulargewichtsbereiche auf Basis einer monovinylaromatischen Verbindung und B elastomere Polymersegmente auf Basis eines konjugierten Diens mit 4 bis 8 C-Atomen bedeuten und wobei die Übergänge zwischen den Polymersegmenten B und $A^3$ allmählich erfolgen und die übrigen Übergänge alle scharf sind, wobei in einem inerten Lösungsmittel in einer

a) ersten Verfahrensstufe ein relativ großer Anteil des monovinylaromatischen Monomeren in Gegenwart von höchstens der Hälfte, bezogen auf die anzuwendende Gesamtmenge eines Monolithiumkohlenwasserstoffes als Initiator (Ia) bis zur praktisch vollständigen Umsetzung des Monomeren polymerisiert wird, sodann
b) in einer zweiten Verfahrensstufe nach Zugabe der restlichen Initiatormenge (Ib), die wenigstens gleich der in Verfahrensstufe a) angewendeten Menge ist, und Zugabe eines weiteren Teils des monovinylaromatischen Monomeren zu der Lösung die Polymerisation bis zur vollständigen Umsetzung der (des) Monomeren weitergeführt und schließlich
c) in einer dritten Verfahrensstufe der Reaktionslösung eine Mischung aus der restlichen Menge des monovinylaromatischen Monomeren und der Gesamtmenge der Monomeren des konjugierten Diens zugegeben wird und bis zur praktisch vollständigen Umsetzung der Monomeren polymerisiert wird,

dadurch gekennzeichnet, daß die Summe der in der ersten a) und zweiten Verfahrensstufe b) eingesetzten Menge an monovinylaromatischen Monomeren mehr als 70 Gew.-% höchstens jedoch 90 Gew.-%, bezogen auf die Gesamtmenge an vinylaromatischen Monomeren, beträgt und wobei man in der ersten Verfahrensstufe a) 40 bis 80 Gew.-% der insgesamt anzuwendenden monovinylaromatischen Monomeren und eine solche Menge Initiator verwendet, daß das Molverhältnis der in der ersten und der zweiten Verfahrensstufe angewendeten Initiatormengen Ia/Ib im Bereich von 1 : 2 bis 1 : 8 liegt, und daß man in der zweiten Verfahrensstufe b) 15 bis 30 Gew.-% der insgesamt anzuwendenden monovinylaromatischen Monomeren zugibt, und in der Verfahrensstufe c) eine Mischung aus 10 bis 30 Gew.-% an vinylaromatischen Monomeren, bezogen auf die insgesamt anzuwendende Menge des monovinylaromatischen Monomeren und 15 bis 35 Gew.-% an Monomeren des konjugierten Diens, bezogen auf die Gesamtmenge der anzuwendenden Monomeren, zugibt und nach vollständiger Umsetzung der Monomeren die Mischung der lebenden Polymerisate mit protonenaktiven Verbindungen behandelt und das Gemisch der Blockcopolymerisate durch Entfernung des Lösungsmittels gewinnt.

2. Verfahren nach Anspruch 1, dadurch gekennzeichnet, daß die erhaltene Mischung der Blockcopolymerisate vor oder nach Entfernung des Lösungsmittels in Gegenwart von Wasserstoff und üblichen Hydrierkatalysatoren behandelt wird.

3. Verfahren nach Anspruch 2, dadurch gekennzeichnet, daß diese Behandlung solange fortgeführt wird, bis (mindestens) der Dienanteil der Blockcopolymerisate auf einen Restgehalt von $<10\%$ hydriert ist.

4. Formteile aus Massen, erhalten nach dem Verfahren gemäß Anspruch 1, 2 oder 3.

**Claims**

1. A process for the preparation of a mixture of block copolymers which contain from 70 to 80% by weight of a monovinyl-aromatic monomer and from 20 to 30% by weight of a conjugated diene, the mixture essentially containing linear three-block copolymers

$$A^1 - A^2 - B \rightarrow A^3$$
$$A^2 - B \rightarrow A^3$$

where $A^1$, $A^2$ and $A^3$ are non-elastomeric polymer segments of different structure and different molecular weight and are based on a monovinyl-aromatic compound, and B is an elastomeric polymer segment based on a conjugated diene of 4 to 8 carbon atoms, and the transitions between the polymer segments B and $A^3$ are gradual and the other transitions are all sharp, by effecting the following process stages in an inert solvent:

a) in a first process stage, polymerizing a relatively high proportion of the monovinyl-aromatic monomer in the presence of at most half, based on the total amount to be used, of a monolithium-hydrocarbon as the initiator, (Ia), until the monomer has been substantially completely converted, thereafter
b) in a second process stage, adding the remaining amount of initiator, (Ib), which is at least equal to the amount used in process stage a), adding a further proportion of the monovinyl-aromatic monomer to the solution, and continuing the polymerization until the monomer(s) has/have been completely converted and finally
c) in a third process stage, adding to the reaction solution a mixture of the residual amount of the monovinyl-aromatic monomer and the total amount of the conjugated diene monomer and polymerizing until the monomers have been substantially completely converted,

wherein the sum of the amounts of monovinyl-aromatic monomers used in the first and second process stages a) and b) is more than 70% by weight but not more than 90% by weight, based on the total amount of vinylaromatic monomers, and, in the first process stage a), from 40 to 80% by weight of the total amount of monovinyl-aromatic monomers to be employed and such an amount of initiator that the molar ratio of the amounts of initiator used respectively in the first and second process stages, Ia/Ib, is from 1 : 2 to 1 : 8, are used, and wherein, in the second process stage b), from 15 to 30% by weight of the total amount of monovinyl-aromatic monomers to be employed is added, and in process stage c) a mixture of from 10 to 30% by weight of the total amount of monovinyl-aromatic monomers to be employed, and from 15 to 35 by weight of conjugated diene monomer, based on the total amount of the monomers to be employed, is added and, after complete conversion of the monomers, the mixture of the living polymers is treated with proton-active compounds, and the resulting mixture of block copolymers is isolated by removing the solvent.

2. A process as claimed in claim 1, wherein the resulting mixture of block copolymers is treated with hydrogen in the presence of a conventional hydrogenation catalyst, before or after removal of the solvent.

3. A process as claimed in claim 2, wherein this treatment is continued until (at least) the copolymerized diene units of the block copolymers have been hydrogenated to a residual content of $<10\%$.

4. Moldings produced from compositions obtained by a process as claimed in claim 1, 2 or 3.

**Revendications**

1. Procédé pour la préparation d'un mélange de copolymères séquencés, contenant 70 à 80% en poids d'un monomère monovinylaromatique et 20 à 30% en poids d'un diène conjugué, mélange qui contient essentiellement les deux copolymères linéaires triséquencés suivants

$$A^1 - A^2 - B \rightarrow A^3$$
$$A^2 - B \rightarrow A^3$$

dans lesquels $A^1$, $A^2$ et $A^3$ représentent des segments de polymère non élastomères de constitution différente et de galle de poids moléculaire différente, à base d'un composé monovinylaromatique, et B représente des segments de polymère élastomères à base d'un diène conjugué comportant 4 à 8 atomes de C, les transitions entre les segments de polymère B et $A^3$ s'effectuant peu à peu et toutes les autres transitions étant nettes, procédé d'après lequel, dans un solvant inerte,

a) dans un premier stade, on polymérise une portion relativement grande du monomère monovinylaromatique en présence de la moitié au maximum, par rapport à la quantité totale à utiliser, d'un hydrocarbure monolithié servant d'initiateur (Ia), jusqu'à la transformation pratiquement complète du monomère,
b) puis, dans un second stade, après addition de la quantité restante d'initiateur (Ib), qui est au moins égale à la quantité utilisée dans le stade a), et après addition d'une autre portion du monomère monovinylaromatique à la solution, on poursuit la polymérisation jusqu'à la transformation complète des (ou du) monomère,
c) et enfin, dans un troisième stade, on ajoute à la solution réactionnelle un mélange de la quantité restante du monomère monovinylaromatique et de la quantité totale des monomères du diène conjugué et on polymérise jusqu'à la transformation pratiquement complète des monomères,

caractérisé en ce que la somme des quantités de monomères monovinylaromatique introduites dans le premier stade a) et dans le second stade b) s'élève à plus de 70% en poids, mais au maximum à 90% en poids par rapport à la quantité totale de monomère monovinylaromatique, avec utilisation, dans le premier stade a), de 40 à 80% en poids du monomère monovinylaromatique à utiliser au total et d'une quantité d'initiateur telle que le rapport molaire des quantités d'initiateur utilisées dans le premier et le second stades, Ia/Ib, se situe dans la gamme de 1 : 2 à 1 : 8, et en ce qu'on ajoute, dans le second stade b), 15 à 30% en poids du monomère monovinylaromatique à utiliser au total et on ajoute, dans le stade c) du procédé, un mélange de 10 à 30% en poids du monomère vinylaromatique, par rapport à la quantité de monomère monovinylaromatique à utiliser au total, et de 15 à 35% en poids de monomère de diène conjugué, par rapport à la quantité totale des monomères à utiliser et, après transformation complète des monomères, on traite le mélange des polymères »vivants« par des composés fixateurs de protons et on obtient le mélange des copolymères séquencés par élimination du solvant.

2. Procédé selon la revendication 1, caractérisé en ce qu'avant ou après l'élimination du solvant, le mélange de copolymères séquencés obtenu est traité en présence d'hydrogène et de catalyseurs d'hydrogénation usuels.

3. Procédé selon la revendication 2, caractérisé en ce que ce traitement est poursuivi jusqu'à ce que la fraction diène (au moins) des copolymères séquencés soit hydrogénée à une teneur résiduelle de moins de 10%.

4. Pièces moulées fabriquées à partir de matières obtenues par le procédé selon l'une quelconque des revendications 1 à 3.